# EUROPEAN PATENT APPLICATION

(11) **EP 4 654 038 A1**
(43) Date of publication of application: **26.11.2025**
(21) Application number: 23922294.6
(22) Date of filing: 19.09.2023
(51) Int. Cl.: G06F 16/25

(54) **SQL STATEMENT COMPILING AND EXECUTING METHOD, ELECTRONIC DEVICE AND DATABASE SYSTEM**

(30) Priority: 16.02.2023 CN 202310165588
(71) Applicant: Huawei Technologies Co., Ltd., Shenzhen, Guangdong 518129 (CN)
(72) Inventor: XU, Shaohua, Shenzhen, Guangdong 518129 (CN); LI, Bing, Shenzhen, Guangdong 518129 (CN); XU, Hongfei, Shenzhen, Guangdong 518129 (CN)
(74) Representative: Pfenning, Meinig & Partner mbB
(86) International application number: PCT/CN2023/119814
(87) International publication number: WO 2024/169175

(57) **Abstract**

This application provides an SQL statement compilation and execution method, an electronic device, and a database system, relates to the field of database technologies, and can reduce storage space occupied by an embedded database in the electronic device, so that the embedded database can be deployed on an electronic device with few resources, and efficient storage, management, and the like are implemented on application data in the electronic device with few resources. The method is applied to a first electronic device, and includes: obtaining a first execution plan in response to a data management instruction, where the first execution plan is generated by a second electronic device by compiling a first SQL statement, and the first SQL statement corresponds to the data management instruction; and executing the first execution plan.

## Description

This application claims priority to Chinese Patent Application No. 202310165588.5, filed with the China National Intellectual Property Administration on February 16, 2023 and entitled "SQL STATEMENT COMPILATION AND EXECUTION METHOD, ELECTRONIC DEVICE, AND DATABASE SYSTEM", which is incorporated herein by reference in its entirety.

### TECHNICAL FIELD

This application relates to the field of database technologies, and in particular, to an SQL statement compilation and execution method, an electronic device, and a database system.

### BACKGROUND

An embedded database is an efficient and compact database, is usually applied to various electronic devices, including but not limited to a mobile phone, a vehicle-mounted navigation device, a set-top box, and the like. The embedded database can help the electronic device efficiently store and manage application data, and the like. The embedded database may be embedded into software of the electronic device, or may be embedded into a hardware structure of the electronic device.

With the advent of the internet of things era, a quantity of applications increases sharply, and application data that needs to be stored and managed in the electronic device also increases. However, for an electronic device with fewfew resources, for example, including but not limited to a wearable device, a treadmill, and a blood pressure meter, a storage resource, an energy consumption resource, and the like of the electronic device are limited. Therefore, a current embedded database cannot be deployed on these electronic devices with few resources due to a limitation of running space. Consequently, efficient storage, management, and the like cannot be implemented on application data in these electronic devices with few resources.

### SUMMARY

This application provides an SQL statement compilation and execution method, an electronic device, and a database system, and can reduce storage space occupied by an embedded database in the electronic device, so that the embedded database can be deployed on an electronic device with few resources, and efficient storage, management, and the like are implemented on application data in the electronic device with few resources.

To achieve the foregoing objective, this application uses the following technical solutions.

According to a first aspect, a structured query language SQL statement compilation and execution method is provided, applied to a first electronic device, where the method includes: obtaining a first execution plan in response to a data management instruction, where the first execution plan is generated by a second electronic device by compiling a first SQL statement, and the first SQL statement corresponds to the data management instruction; and executing the first execution plan.

Based on the foregoing technical solution, when receiving the data management instruction, the first electronic device may obtain the first execution plan, and execute the first execution plan, to implement storage, management, and the like of application data in the electronic device. The first execution plan is generated by the second electronic device by compiling the SQL statement corresponding to the data management instruction. In other words, the first electronic device does not need to perform a compilation operation on the SQL statement corresponding to the data management instruction. In this way, an embedded database deployed on the first electronic device may not include a compiler used to compile the SQL statement, so that storage space occupied by the embedded database in the electronic device can be reduced, and the embedded database can be deployed on an electronic device with few resources. In addition, the first electronic device directly calls the execution plan generated by compiling the SQL statement, and does not need to compile the SQL statement without changing a manner of operating the database by using the SQL statement. For an electronic device that has a high requirement on power consumption and that has few resources, power consumption can be reduced.

In a possible design, obtaining the first execution plan includes: An SQL execution engine obtains the first execution plan through an API interface. Based on this design, the electronic device may obtain the execution plan generated by compiling the SQL statement, and then directly execute the execution plan, so that an embedded database can be deployed on an electronic device with few resources, and efficient storage, management, and the like are implemented on application data in the electronic device with few resources.

In a possible design, executing the first execution plan includes: The SQL execution engine executes the first execution plan; and the SQL execution engine starts a storage engine to perform a data read/write operation based on an execution result. Based on this design, after executing the first execution plan, the SQL execution engine starts, based on the execution result, the storage engine to perform the data read/write operation, to implement a management operation on the application data in the electronic device, for example, various operations such as adding, deleting, modifying, and querying.

In a possible design, the data management instruction is triggered by a first application, and the first execution plan is provided by a second application. Based on this design, an application triggered by the data management instruction is different from an application that provides the execution plan. For example, the first application may be an upper-layer application used to provide various functions (for example, measuring a heart rate, counting steps, recording calories, and recording a quantity of rope jumps) for a user. The second application may be a dedicated application used to provide the first execution plan. In this way, the second application may provide the first execution plan for different first applications. Therefore, only one module configured to provide the execution plan needs to be deployed on the electronic device, so that storage space occupied in the electronic device can be saved. In addition, one application implements a function of providing the execution plan, so that unified management of the execution plan can be implemented.

In a possible design, code of the second application includes source code of the second application and the first SQL statement. Based on this design, the code of the second application includes the source code of the second application and the SQL statement. In this way, when the code of the second application is compiled into an executable file, the SQL statement may be synchronously compiled and embedded into the executable file. Therefore, when the executable file is deployed on the electronic device, the execution plan compiled by using the SQL statement may also be deployed on the electronic device, so that the execution plan can be called subsequently.

In a possible design, a writing language of the source code of the second application is different from a writing language of the first SQL statement, the writing language of the source code of the second application is the same as a writing language of a second execution plan, the second execution plan is generated by compiling the first SQL statement, and the first execution plan is generated by compiling the second execution plan. Based on this design, the writing language of the first SQL statement is first converted into a language that is the same as the writing language of the source code of the second application, and then the first SQL statement and the source code of the second application are compiled into an executable file, so that a file obtained by compiling the SQL statement is compatible with a file obtained by compiling the source code of the second application.

In a possible design, the first execution plan is in a binary form. Based on this design, the binary form is a form that can be identified by a computer. Therefore, the electronic device can successfully execute the first execution plan.

According to a second aspect, an SQL statement compilation and execution method is provided, applied to a second electronic device, where the method includes: receiving target code, where the target code includes a first SQL statement and source code of a second application, the first SQL statement corresponds to a first writing language, the source code of the second application corresponds to a second writing language, and the first writing language is different from the second writing language; compiling the first SQL statement into a second execution plan in response to a compilation instruction, where the second execution plan corresponds to the second writing language; and compiling the second execution plan and the source code of the second application into an executable file, where the executable file includes a first execution plan, and the first execution plan is generated by compiling the second execution plan.

Based on this design, after receiving the SQL statement and the source code of the application that are in different writing languages, the second electronic device first converts the writing language of the SQL statement into a language that is the same as the writing language of the source code of the application, and then compiles the converted SQL statement and the source code of the application together into the executable file. The executable file includes the execution plan obtained by compiling the SQL statement, so that the file obtained by compiling the execution plan and the source code of the application may be deployed together in another electronic device, for example, an electronic device with few resources. In this way, the electronic device may directly manage the application data by using the execution plan corresponding to the deployed SQL statement, and a compiler used to compile the SQL statement does not need to be deployed on the electronic device, so that storage space occupied by the embedded database in the electronic device can be reduced, and the embedded database can be deployed on an electronic device with few resources.

In a possible design, compiling the first SQL statement into the second execution plan includes: A first compilation tool compiles the first SQL statement into the second execution plan.

In a possible design, compiling the second execution plan and the source code of the second application into the executable file includes: A second compilation tool compiles the second execution plan and the source code of the second application into the executable file.

In a possible design, the first compilation tool includes a code scanner, and before compiling the first SQL statement into the second execution plan, the method further includes: The code scanner obtains the first SQL statement by scanning the target code. Based on this design, the first compilation tool may identify an SQL statement included with source code of another application, to implement filtering of the SQL statement.

In a possible design, the first compilation tool further includes an SQL compiler and a code generator, and that the first compilation tool compiles the first SQL statement into the second execution plan includes: The SQL compiler compiles the first SQL statement into a third execution plan, where a writing language of the third execution plan is different from the second writing language; and the code generator generates the second execution plan based on the third execution plan. Based on this design, the SQL statement may be converted into a statement whose writing language is the same as the writing language of the source code of the second application, and the converted SQL statement is compiled into the executable plan. In this way, a file obtained by compiling the SQL statement is compatible with a file obtained by compiling the source code of the second application.

In a possible design, the executable file is in a binary form. Based on this design, the binary form is a form that can be identified by a computer. Therefore, the electronic device can successfully execute the first execution plan.

According to a third aspect, a database system is provided, including a database kernel and a first compilation tool. The database kernel is deployed on a first electronic device, and the database kernel is configured to perform the method according to any one of the first aspect and the designs of the first aspect. The first compilation tool is deployed on a second electronic device, and the first compilation tool is configured to compile a first SQL statement into a second execution plan.

In a possible design, the database kernel includes an API interface, an SQL execution engine, and a storage engine. The API interface is configured to provide the SQL execution engine with an interface for calling a first execution plan. The SQL execution engine is configured to execute the first execution plan. The storage engine is configured to perform a data read/write operation based on an execution result of the first execution plan.

In a possible design, the first compilation tool includes a code scanner, an SQL compiler, and a code generator. The code scanner is configured to scan target code to obtain the first SQL statement. The SQL compiler is configured to compile the first SQL statement into a third execution plan, where a writing language of the third execution plan is different from a second writing language. The code generator generates the second execution plan based on the third execution plan.

According to a fourth aspect, a first electronic device is provided, where the first electronic device includes a first application, a second application, and a database kernel included in the database system according to any one of the third aspect and the designs of the third aspect. The first application is used to trigger the data management instruction included in the method according to any one of the first aspect and the designs of the first aspect, and the second application is used to provide the first execution plan included in the method according to any one of the first aspect and the designs of the first aspect.

According to a fifth aspect, a second electronic device is provided, where the second electronic device includes a first compilation tool included in the database system according to any one of the third aspect and the designs of the third aspect.

According to a sixth aspect, an electronic device is provided, including a processor and a memory, where the memory is coupled to the processor, the memory is configured to store computer program code, the computer program code includes computer instructions, and the processor reads the computer instructions from the memory, so that the electronic device performs the method according to any one of the first aspect and the designs of the first aspect, or the electronic device performs the method according to any one of the second aspect and the designs of the second aspect. Optionally, the memory may be coupled to the processor, or may be independent of the processor.

In a possible design, the electronic device further includes a communication interface, and the communication interface may be used by the electronic device to communicate with another apparatus. For example, the communication interface may be a transceiver, an input/output interface, an interface circuit, an output circuit, an input circuit, a pin, a related circuit, or the like.

In a possible design, the electronic device further includes a display, and the display may be used by the electronic device to perform a display operation.

According to a seventh aspect, a computer-readable storage medium is provided. The computer-readable storage medium includes a computer program. When the computer program is run on an electronic device, the electronic device is enabled to perform the method according to any one of the first aspect and the designs of the first aspect, or the electronic device is enabled to perform the method according to any one of the second aspect and the designs of the second aspect.

According to an eighth aspect, a computer program product is provided. When the computer program product runs on a computer, the computer is enabled to perform the method according to any one of the first aspect and the designs of the first aspect, or the computer is enabled to perform the method according to any one of the second aspect and the designs of the second aspect.

According to a ninth aspect, a chip system is provided, including at least one processor and at least one interface circuit, where the at least one interface circuit is configured to perform a transceiver function and send instructions to the at least one processor, and when the at least one processor executes the instructions, the at least one processor is enabled to perform the method according to any one of the first aspect, the second aspect, and the designs of the first aspect or the second aspect.

According to a tenth aspect, a communication system is provided, including the first electronic device according to the fourth aspect and the second electronic device according to the fifth aspect.

It should be noted that, for technical effect brought by any design of the third aspect to the tenth aspect, refer to the technical effect brought by a corresponding design of the first aspect or the second aspect. Details are not described herein again.

### BRIEF DESCRIPTION OF DRAWINGS

FIG. 1 is a diagram of a structure of existing SQLite;
FIG. 2 is a diagram of an architecture of an existing file system-based data management technology;
FIG. 3 is a diagram of an existing architecture for managing application data;
FIG. 4 is a diagram of an architecture of a communication system according to an embodiment of this application;
FIG. 5 is a diagram of a structure of an electronic device according to an embodiment of this application;
FIG. 6 is a diagram of a system architecture of an embedded database according to an embodiment of this application;
FIG. 7 is a diagram of a process of an SQL statement compilation and execution method according to an embodiment of this application;
FIG. 8 is a diagram of a process of another SQL statement compilation and execution method according to an embodiment of this application;
FIG. 9 is a diagram of a process of another SQL statement compilation and execution method according to an embodiment of this application;
FIG. 10 is a diagram of a process of another SQL statement compilation and execution method according to an embodiment of this application;
FIG. 11 is a schematic flowchart of an SQL statement compilation and execution method according to an embodiment of this application;
FIG. 12 is a schematic flowchart of another SQL statement compilation and execution method according to an embodiment of this application;
FIG. 13 is a diagram of a structure of an electronic device according to an embodiment of this application; and
FIG. 14 is a diagram of a structure of a chip system according to an embodiment of this application.

### DESCRIPTION OF EMBODIMENTS

The following describes technical solutions in embodiments in this application in detail with reference to the accompanying drawings.

In the descriptions of this application, unless otherwise specified, "/" indicates that associated objects are in an "or" relationship, for example, A/B may mean "A or B". "and/or" used in this application is only used to describe an association relationship between associated objects, and indicates that three relationships may exist. For example, "A and/or B" may indicate the following three cases: Only A exists, both A and B exist, and only B exists, where A and B may be singular or plural.

In the descriptions of this application, the term "a plurality of" means two or more than two unless otherwise specified. At least one of the following items (pieces) or a similar expression thereof indicates any combination of these items, including a single item (piece) or any combination of a plurality of items (pieces). For example, at least one of a, b, and c may represent: a, b, c, a and b, a and c, b and c, or a, b, and c, where a, b, and c may be singular or plural.

In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used to represent giving an example, an illustration, or a description. Any embodiment or design solution described as "example" or "for example" in embodiments of this application should not be construed as being more preferential or advantageous than other embodiments or design solutions. Exactly, use of the terms such as "example" or "for example" is intended to present a related concept in a specific manner for ease of understanding.

Features, structures, or characteristics in this application may be combined in one or more embodiments in any appropriate manner. Sequence numbers of the processes do not mean execution sequences in various embodiments of this application. The execution sequences of the processes should be determined based on functions and internal logic of the processes, and should not be construed as any limitation on implementation processes of embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on a requirement.

In this application, unless otherwise specified, for same or similar parts in embodiments, refer to each other. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The implementations of this application are not intended to limit the protection scope of this application.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

For ease of understanding, the following first describes technical terms and related concepts that may be used in embodiments of this application.

### 1. Embedded database

A database is a warehouse where data is organized, stored, and managed based on a data structure. An embedded database may be a lightweight database embedded into an application. In some embodiments, the embedded database may include an embedded relational database and an embedded non-relational database. The embedded relational database is a database created based on a relational model. The relational model may be a two-dimensional table model, and the embedded relational database may be a data organization formed by two-dimensional tables and relationships between the two-dimensional tables. The embedded non-relational database may be a distributed database that stores data in a form of key-value pair and does not comply with a relational model.

### 2. Structured query language (structured query language, SQL)

The SQL is a database query and program design language, and may be used to access, query, update, and manage a database system, like the foregoing embedded database system. In some scenarios, an SQL statement may be used interactively in command mode. In some other scenarios, the SQL statement may be embedded into another language, such as C, C++, and Java for use. In some embodiments, adding, deleting, modifying, and querying (create/update/retrieve/delete, CRUD) operations on the embedded database system may be implemented based on an SQL statement.

### 3. File system

A file system is a method and a data structure that are used by an operating system to define files in a storage device or a partition, that is, a method for organizing files in a storage device. A software mechanism responsible for managing and storing file information in the operating system is referred to as a file management system, or a file system for short. From a perspective of a system, the file system is a system that organizes and allocates space of a file storage device and that is responsible for storing a file and protecting and retrieving the stored file. Specifically, the file system is responsible for creating a file for a user, storing, reading, modifying, and dumping the file, controlling file access, canceling the file when the user no longer uses the file, and the like.

### 4. Integrated development environment (integrated development environment, IDE)

The IDE is an application that is used to provide a program development environment, and generally includes tools such as a code editor, a compiler, a debugger, and a graphical user interface. The IDE integrates various functions such as code writing, analysis, compilation, and debugging. In other words, software or a software suite that has the foregoing functions may be referred to as an IDE.

### 5. Execution plan

The execution plan is a tool provided by a database for a user to parse, analyze, and optimize an SQL statement. For example, functions of the execution plan include but are not limited to displaying a table read sequence, a data read operation type, an index that can be used, an index that is actually used, a reference relationship between tables, and a quantity of rows queried in each table. In other words, the execution plan indicates an operation performed in each step in an actual execution process of an SQL statement in a database. The execution plan is essentially an execution tree including physical operators. A physical operator generally corresponds to a relational operation, such as table scanning, joining, and sorting. The execution plan organizes different physical operators in an execution tree in a specified sequence to execute an SQL statement.

### 6. Abstract syntax tree

In computer science, the abstract syntax tree (abstract syntax tree, AST), or the syntax tree (syntax tree), is an abstract representation of a syntax structure of source code. The abstract syntax tree indicates a syntax structure of programming language in a tree form. Each node on the tree indicates a structure in the source code.

With the advent of the internet of things era, a quantity of applications increases sharply, and application data that needs to be stored and managed in an electronic device also increases. In some scenarios, for an electronic device with few resources, for example, including but not limited to a wearable device, a treadmill, and a blood pressure meter, how to efficiently manage application data in an environment with limited storage resources, energy consumption resources, and the like is a huge challenge.

However, a current embedded database cannot be deployed on these electronic devices with few resources due to a limitation of running space. Consequently, efficient storage, management, and the like cannot be implemented on application data in these electronic devices with few resources. For example, a current embedded database SQLite is used as an example. The SQLite is a most commonly used embedded database in the industry currently, and is an embedded relational database. The SQLite is open-source and supports cross-platform (including but not limited to iOS^{®}, Mac^{®}, Android^{®}, Windows^{®}, and Linux^{®}) capabilities. The SQLite has the following advantages: Source code is unrestricted by copyright, freely available, open-source, and cost-free; no independent server process or operating system is required; an SQLite database is stored in a single cross-platform disk file; no configuration is required, and no installation or management is required; no external dependency is required; and lightweight, compact in size, and often integrated into various applications.

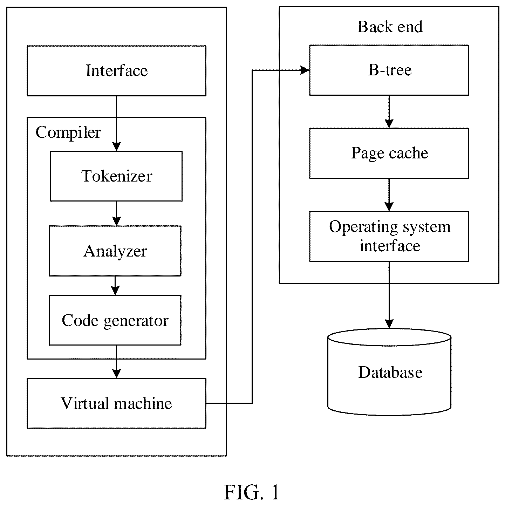

In some scenarios, the SQLite uses a modular architecture. For example, FIG. 1 is a diagram of a structure of SQLite. As shown in FIG. 1, the SQLite includes modules such as an interface, a compiler, a virtual machine, and a back end.

The interface may include an SQLite C application programming interface (application programming interface, API), and a program, a script language, a library file, and the like may all interact with the SQLite through the interface.

The compiler includes a tokenizer, an analyzer, and a code generator. The tokenizer, the analyzer, and the code generator work together to process an SQL statement in a text format, analyze a syntax, and convert the SQL statement into a hierarchical data structure that is more convenient to process at a bottom layer. Specifically, the tokenizer and the analyzer may perform syntax check on the SQL statement, generate a syntax tree, and transfer the syntax tree to the code generator. The code generator may generate a bytecode program and the like based on the received syntax tree.

The virtual machine is a central part of an architecture of SQLite and may also be referred to as a virtual database engine (virtual database engine, VDBE). The virtual machine may execute the bytecode program from the code generator, and output an execution result, and the like.

The back end includes a balanced-tree (Balance-tree, B-tree) (or B-tree), a page cache (page cache), and an operating system interface. The B-tree and the page cache jointly manage data, such as moving and arranging pages. Specifically, the B-tree is used to establish an index for data, and maintain a complex relationship between pages, so that required data can be quickly found. The page cache is mainly used to manage transactions, locks, memory buffers, and crash recovery, and transfer pages based on a command of the B-tree. Operations (such as locking a file) of different operating systems may be different. Therefore, the operating system interface may be used to hide these differences, and provide an abstract interface between another module of the SQLite and the operating system, so that the another module of the SQLite may directly send a command without considering the difference of the operating system.

Although the SQLite adopts modular design, code coupling between modules is high. There are about 160,000 lines of code, and are isolated based on compiler macros. However, a function usually includes more than five compiler macros. As a result, it is difficult to implement code maintenance. However, if functions of the SQLite are simplified to implement code reduction, it is also difficult to implement. To be specific, if all code of the SQLite is selected to be compiled, at least 1.6 megabytes (MegaByte, MB) of running memory needs to be occupied. For an electronic device with few resources, available space of a general read only memory (read only memory, ROM) is about 200 kilobytes (Kilobyte, KB), and available space of a random access memory (random access memory, RAM) is about 50 KB. Consequently, the embedded databases like the SQLite cannot be deployed on an electronic device with few resources.

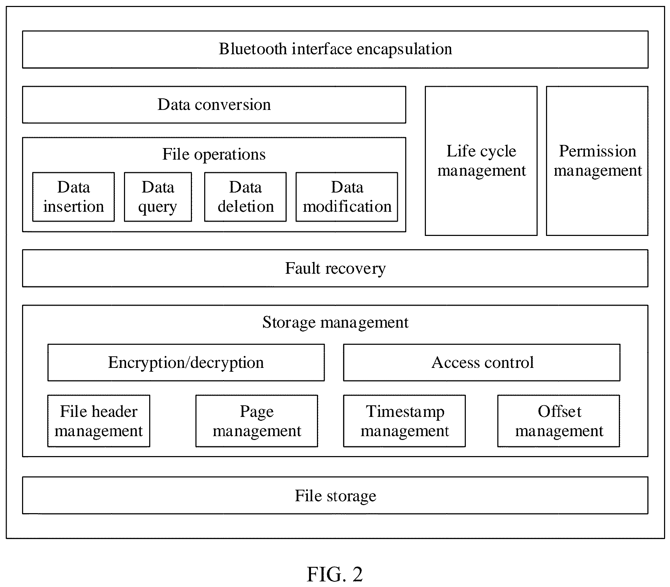

Therefore, to implement management of application data in an electronic device with few resources, a file system-based data management method is further proposed in a related solution. For example, FIG. 2 is a diagram of an architecture of a file system-based data management technology. As shown in FIG. 2, the system architecture includes a file operation module (including but not limited to data insertion, data query, data deletion, and data modification), a fault recovery module, a life cycle management module, a permission management module, a storage management module (including but not limited to encryption and decryption, access control, file header management, page (page) management, timestamp (timestamp) management, and offset (offset) management), a file storage module, and a data conversion module and a Bluetooth interface encapsulation module that are used for data synchronization between devices. Functions of these modules are not described in the specification.

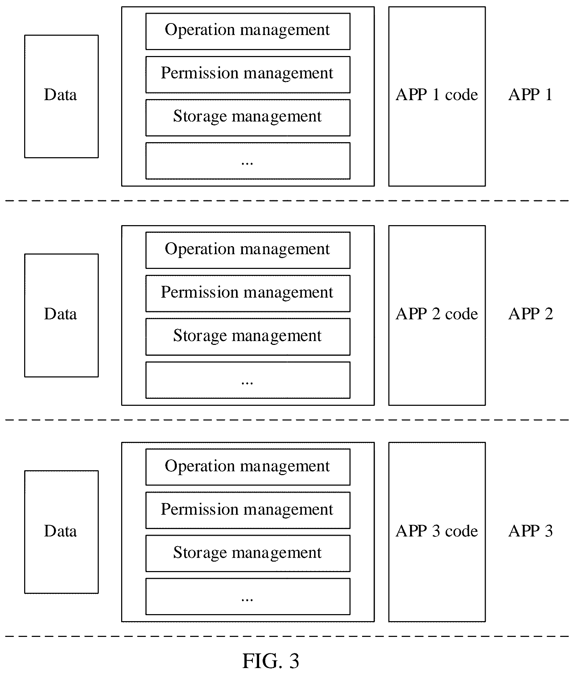

In the foregoing solution, as shown in FIG. 3, for each application (application, APP), such as an APP 1, an APP 2, and an APP 3, in an electronic device, a file data format needs to be customized, to implement functions of modules, as shown in FIG. 1, such as operation management, storage management, life cycle management, and fault recovery based on the format. In this way, each application (or each service) repeatedly constructs a same function. In addition, for data synchronization between devices, an independent Bluetooth interface needs to be defined for various information such as data, a status, and a configuration of each application. This causes a large development workload, high development costs, and poor service expansion flexibility.

Based on this, embodiments of this application provide an SQL statement compilation and execution method, to reduce storage space occupied by an embedded database in an electronic device, so that the embedded database can be deployed on an electronic device with few resources, efficient storage, management, and the like are implemented on application data in the electronic device with few resources, development costs can be reduced, development efficiency can be improved, and service expansion flexibility can be improved.

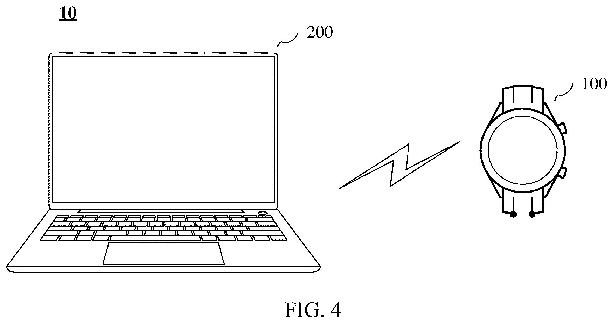

For example, FIG. 4 is a diagram of an architecture of a communication system 10 to which an SQL statement compilation and execution method according to an embodiment of this application is applied. For example, the communication system 10 includes an electronic device 100 and a compilation device 200.

The electronic device 100 may also be referred to as a deployment device 100, and may be configured to deploy a database kernel of an embedded database provided in embodiments of this application, and implement efficient storage, management, and the like on application data in the electronic device 100 by using the embedded database. The embedded database provided in embodiments of this application is described in detail below. For example, the electronic device 100 may include but is not limited to various terminal devices such as a large-screen display device, a wearable device, a vehicle-mounted device, an artificial intelligence (artificial intelligence, AI) device, an augmented reality (augmented reality, AR) device, a virtual reality (virtual reality, VR) device, a smart home device, and/or a smart city device. It may be understood that a specific type of the electronic device 100 is not limited in embodiments of this application. FIG. 4 shows an example of the electronic device 100 being a smart hand.

The compilation device 200 may be configured to compile various SQL statements into corresponding execution plans. The execution plan may be called by an embedded database deployed on the electronic device 100, and various CRDU operations are performed to store, manage, and the like data in the electronic device 100. In some examples, the compilation device 200 may include but is not limited to various terminal devices such as a desktop computer, a laptop computer, a handheld computer, a notebook computer, an ultra-mobile personal computer (ultra-mobile personal computer, UMPC), and a netbook. In some other examples, the compilation device 200 may be a device or a network device that has a computing function, like a cloud server or a network server. The compilation device 200 may be a server, or may be a server cluster including a plurality of servers, or may be a cloud computing service center. It may be understood that a specific type of the compilation device 200 is not specifically limited in embodiments of this application. FIG. 4 shows an example of the compilation device 200 being a computer.

Optionally, an operating system installed on the electronic device 100 and/or the compilation device 200 may include but is not limited to iOS^{®}, Android^{®}, Harmony^{®}, Windows^{®}, Linux^{®}, or another operating system. The operating system installed on the electronic device 100 and/or the compilation device 200 is not specifically limited in this application.

Optionally, the electronic device 100 may communicate with the compilation device 200 by using a wired communication technology or a wireless communication technology. For example, the wireless communication technology includes but is not limited to at least one of the following: near field communication (near field communication, NFC), Bluetooth (Bluetooth, BT) (for example, conventional Bluetooth or Bluetooth low energy (Bluetooth low energy, BLE)), a wireless local area network (wireless local area network, WLAN) (like a wireless fidelity (wireless fidelity, Wi-Fi) network), Zigbee (Zigbee), frequency modulation (frequency modulation, FM), infrared (infrared, IR), and a wide area network that is transferred by using a relay (relay) device.

It may be understood that FIG. 1 is merely a simplified diagram of an example for ease of understanding. During actual application, the foregoing system may further include another device, which is not shown in the figure.

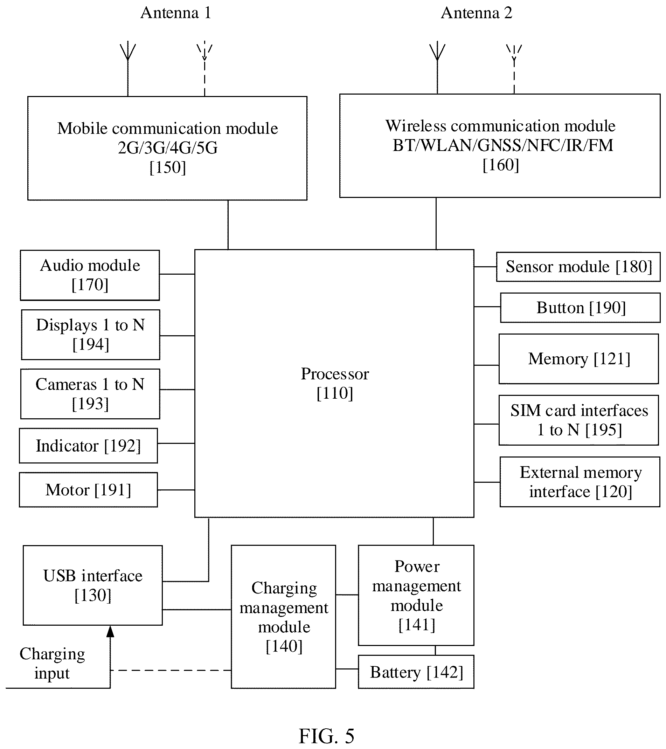

For example, FIG. 5 is a diagram of a hardware structure of an electronic device 100.

As shown in FIG. 5, the electronic device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly call the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger.

The power management module 141 is configured to connect to the battery 142, the charging management module 140, and the processor 110. The power management module 141 receives inputs from the battery 142 and/or the charging management module 140, and supplies power to the processor 110, the memory 121, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD). In some embodiments, the electronic device 100 may include one or N displays 194, where N is a positive integer greater than 1.

The camera 193 is configured to capture a static image or a video. In some embodiments, the electronic device 100 may include one or N cameras 193, where N is a positive integer greater than 1.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external memory card.

The memory 121 may be configured to store computer-executable program code. The executable program code includes instructions. The memory 121 may include a program storage area and a data storage area. The program storage area may store an operating system, an application required by at least one function (for example, a sound playing function or an image playing function), and the like. The data storage area may store data (for example, audio data and an address book) created in a process of using the electronic device 100, and the like. In addition, the memory 121 may include a high-speed random access memory, or may include a nonvolatile memory, for example, at least one magnetic disk storage device, a flash memory, or a universal flash storage (universal flash storage, UFS). The processor 110 performs various function applications of the electronic device 100 and data processing by running the instructions stored in the memory 121 and/or instructions stored in the memory disposed in the processor.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110. The electronic device 100 may perform music playing, recording, or the like through the audio module 170. The audio module 170 may include a speaker, a receiver, a microphone, a headset jack, an application processor, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card.

Optionally, for a specific structure of the compilation device 200, refer to implementation of the electronic device 100. The compilation device 200 may include more or fewer components than the electronic device 100, or a combination of some components, or splits from some components, or a different component layout. The components may be implemented by hardware, software, or a combination of software and hardware. A specific structure of the compilation device 200 is also not limited in embodiments of this application.

The following describes the embedded database provided in the embodiments of this application.

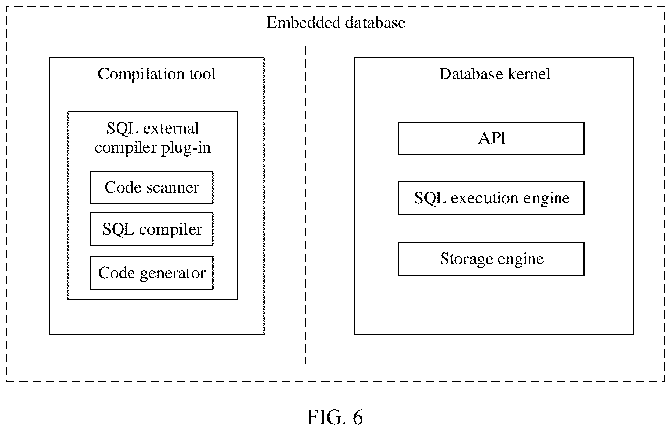

For example, FIG. 6 is a diagram of a system architecture of an embedded database according to an embodiment of this application. As shown in FIG. 6, the system structure of the embedded database includes an SQL external compiler plug-in and a database kernel.

The SQL external compiler plug-in may be a plug-in that implements an SQL statement compilation function, namely, a plug-in that compiles an SQL statement into an execution plan. The plug-in is referred to as the SQL external compiler plug-in in this embodiment of this application. Certainly, in another embodiment, the plug-in may alternatively be referred to as a first plug-in or another name.

In some embodiments, the SQL external compiler plug-in may be deployed on, for example, a compilation device 200 shown in FIG. 4. In some embodiments, a compilation tool like an IDE may be further deployed on the compilation device 200 shown in FIG. 4. The compilation tool may be used to perform code writing, analysis, compilation, debugging, and the like, to implement development functions for various applications. A specific type of the development tool is not limited in this application. In a possible implementation, the SQL external compiler plug-in may be embedded into the foregoing compilation tool for use. In another possible implementation, the SQL external compiler plug-in may alternatively exist independently of the foregoing compilation tool. A deployment manner of the SQL external compiler plug-in is not specifically limited in this application.

In some embodiments, the SQL external compiler plug-in includes a code scanner, an SQL compiler, a code generator, and the like.

The code scanner may be used to scan code written by a developer, where the code includes one or more of development code of an application or a system and an SQL statement. The code scanner scans the code written by the developer, for example, scans SQL statement calls in the code, to find corresponding SQL statements and calls.

The SQL compiler may be used to compile the SQL statement found by the code scanner, to generate an execution plan. For example, the execution plan may be in a form of execution function, parameter assignment, or the like.

The code generator may be used to generate target code based on the execution plan compiled by the SQL compiler, and replace an original SQL statement with the target code. For example, a development language of the target code is the same as or compatible with a development language of the development code of the foregoing application or system. It may be understood that, compatibility may mean that the target code may be compiled and run together with the development code of the foregoing application or system, or the like.

The database kernel may be used to call the execution plan compiled by the SQL external compiler plug-in, and implement storage and management on application data by performing various CRDU operations. In some embodiments, the database kernel may be deployed on, for example, the electronic device 100 shown in FIG. 4.

In some embodiments, the database kernel includes an API interface, an SQL execution engine, a storage engine, and the like.

The API interface may be used to provide an interface for the SQL execution engine to support the SQL execution engine in calling the execution plan. For example, an input of the API interface may be an abstract syntax tree, or an execution function.

The SQL execution engine may be used to provide a capability of an SQL execution layer, and call the storage engine by running the execution plan to complete various SQL operations on data, such as the CRDU operation.

The storage engine may be used to provide various capabilities such as a data storage format, an access method, a transaction, and an index, to complete a read/write operation and the like on the data.

It may be understood that the architecture shown in FIG. 6 is merely an example, and is merely used as a logical architecture. During actual implementation, the architecture may be divided in another manner. For example, the system architecture of the embedded database may be divided into functional modules, and each functional module is divided for each function. Alternatively, two or more functions may be integrated into one processing unit. The SQL execution engine and the storage engine shown in FIG. 6 may alternatively be integrated into one processing unit. The integrated unit may be implemented in a form of hardware, or may be implemented in a form of software functional module.

All technical solutions involved in the following embodiments may be implemented in a device with the structure shown in FIG. 5 and FIG. 6, and in the system architecture shown in FIG. 4.

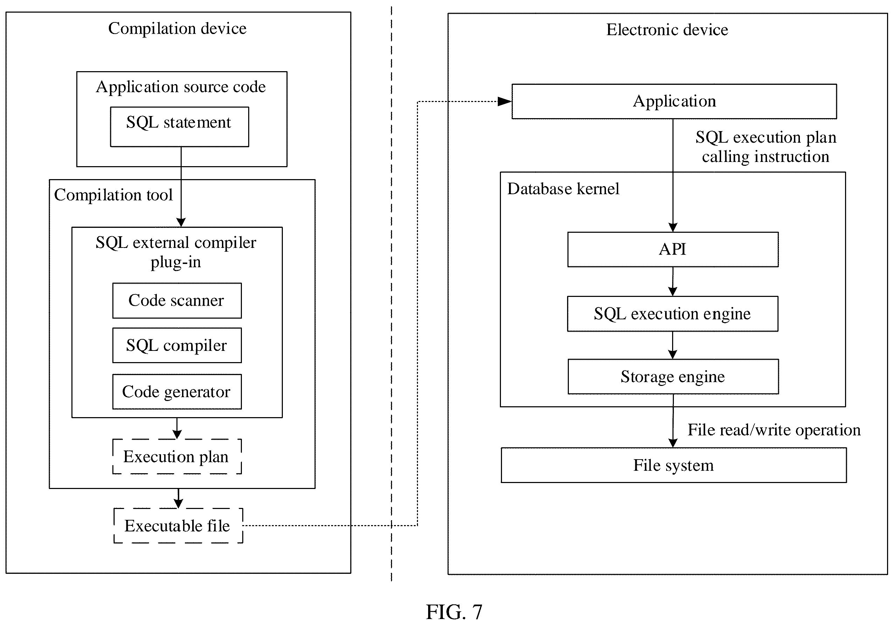

The following describes an example in which the electronic device 100 is an electronic device and the compilation device 200 is a compilation device. First, with reference to FIG. 7, an SQL statement compilation and execution method provided in an embodiment of this application is described.

As shown in FIG. 7, the SQL statement compilation and execution method includes a compilation phase and an execution phase. The compilation phase is executed by the compilation device, and the execution phase is executed by the electronic device. In other words, the two phases are separately executed by different devices.

In the compilation phase, an SQL statement is compiled into an execution plan by an external compiler plug-in. In a specific embodiment, in a process of developing an application by using a compilation tool, a developer may write an SQL statement used to implement a CRDU operation on data into source code of the application, for example, embed, by using API code, the SQL statement used to operate the data. Then, the external compiler plug-in embedded in the compilation tool is used to compile the SQL statement and generate the corresponding execution plan. A language corresponding to the execution plan is the same as or compatible with a writing language of the source code of the application. The source code of the application and the execution plan are compiled into an executable file by using the compilation tool. It may be understood that the executable file is a file that can be loaded and executed by an operating system. For example, the executable file may be a binary file.

Then, the executable file may be loaded to the electronic device, for example, an image file of the executable file is loaded to the electronic device through burning. A specific loading manner is not limited in embodiments of this application. It may be understood that, because the executable file is also compiled by using the source code of the application, after the executable file is loaded to the electronic device, the application is also installed on the electronic device.

Subsequently, the electronic device receives an instruction for managing data (or referred to as operating the data, for example, performing various operations such as CRDU on the data). Specifically, the instruction may be an execution plan calling instruction. Optionally, the instruction may be an instruction initiated by the application installed on the electronic device. In response to the instruction, an execution engine of the electronic device calls the execution plan based on the pre-loaded executable file through an API interface, and a storage engine is started to perform a data read/write operation. Accordingly, the storage engine performs the file read/write operation by using a file system.

Based on the foregoing technical solution, compilation and execution of the SQL statement are performed by different devices in different phases. In this way, an embedded database deployed on the electronic device does not need to include an SQL compiler (for example, the tokenizer and the analyzer shown in FIG. 1), so that storage space occupied by the embedded database in the electronic device can be reduced. In addition, the electronic device directly calls the execution plan generated by compiling the SQL statement, and does not need to compile the SQL statement when a manner of operating the database by using the SQL statement is remained. For an electronic device that has a high requirement on power consumption and has few resources, power consumption of compiling the SQL statement can be reduced, and performance and power consumption overheads caused by repeatedly compiling the SQL statement in the solution shown in FIG. 1 are also optimized.

In addition, in a code development phase, the developer may still write code according to an SQL standard, that is, use a widely used SQL statement to complete database operations. Compared with the file system-based method, this method can reduce development costs, improve development efficiency, and improve service scalability flexibility.

In a specific embodiment, the foregoing SQL statement may be embedded into a dedicated application, that is, the application in FIG. 7 is a data platform application. The dedicated application may provide a table management capability of an embedded database, and provide operations such as CRDU for data for one or more upper-layer applications to call the data.

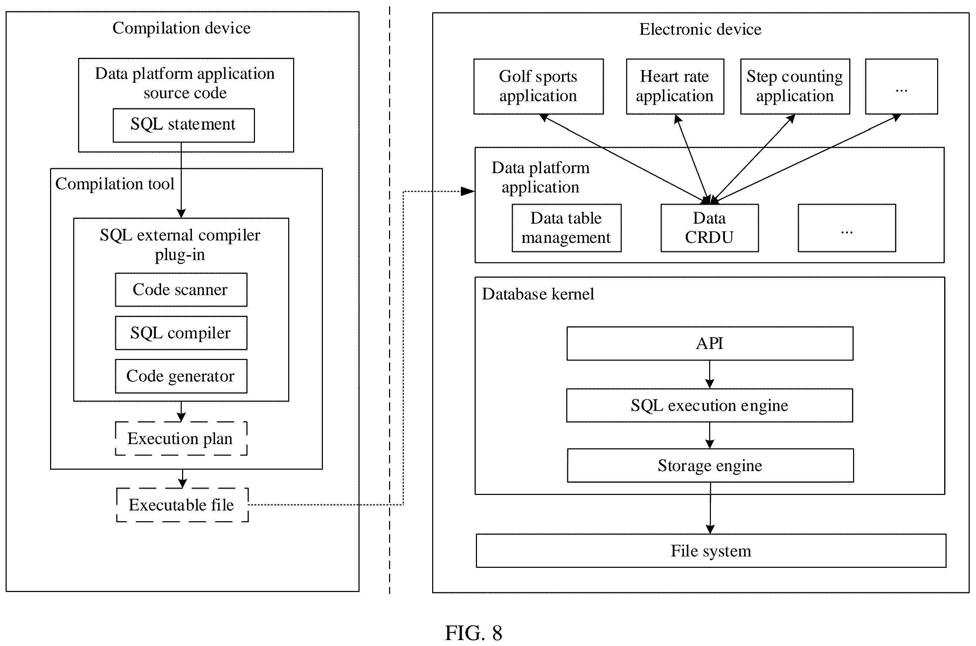

For example, as shown in FIG. 8, the dedicated application is referred to as a data platform application in this embodiment of this application. In another embodiment, the dedicated application may alternatively be referred to as a first application, another application, or the like. The data platform application may be one or more upper-layer applications, including but not limited to a golf sports application, a heart rate application, and a step counting application, and provide various functions related to an embedded database, such as a table management capability, and a CRDU operation on data. It may be understood that both the upper-layer applications and the data platform application may be installed on the electronic device. The upper-layer application may be an application that is on the electronic device and that is used to provide various functions (for example, measuring a heart rate, counting steps, recording calories, and recording a quantity of rope jumps) for a user.

For example, the upper-layer application like the golf sports application, the heart rate application, or the step counting application may implement a table management function by using a data table management module (or referred to as a data table management interface) of the data platform application, for example, creating a data table or deleting a data table in an embedded database. The upper-layer application like the golf sports application, the heart rate application, and the step counting application may also implement a CRDU operation on data by using a data CRDU module (or referred to as a CRDU interface) of the data platform application, for example, deleting data, adding data, modifying data, and querying data in an embedded database.

Optionally, there may be one or more dedicated applications. FIG. 8 shows an example of one dedicated application. Upper-layer applications supported by different dedicated applications may be different, and different dedicated applications may share one database kernel.

Similarly, in a process of developing the data platform application by using the compilation tool, the developer may embed various SQL statements used to implement functions related to the embedded database, such as a table management statement (for example, creating a table (create table), or deleting a table (drop table)) and a CRDU statement, into source code of the data platform application. Then, the external compiler plug-in is used to compile the SQL statement and generate a corresponding execution plan. A language corresponding to the execution plan is the same as or compatible with a writing language of the data platform application. The execution plan and the source code of the data platform application are compiled into an executable file (for example, a data platform binary image file).

In this embodiment, the external compiler plug-in may be embedded into the compilation tool in a manner similar to that shown in FIG. 7, or may exist independently of the compilation tool. For example, a compilation tool chain is deployed on the compilation device, and the compilation tool chain includes a plurality of compilation tools, such as an external compiler plug-in and another compilation tool. The external compiler plug-in is used to compile an SQL statement into an execution plan, and the another compilation tool (like a (GNU C Compiler, GCC) compiler) is used to compile the execution plan compiled by the external compiler plug-in and the source code of the data platform into the executable file.

Subsequently, the electronic device may also load the executable file generated by the compilation device, and install the data platform application in the electronic device, and then complete the data read/write operation based on an instruction for managing data.

In some examples, in a process of using the electronic device by the user, the electronic device may generate corresponding usage data. For example, the golf sports application may collect golf exercise data of the user, the heart rate application may collect heart rate data of the user, and the step counting application may collect a step count of the user. The step counting application is used as an example. After collecting the step count of the user, the step counting application may initiate a data write instruction. In response to the instruction, the step counting application may write collected data into the embedded data by using the data CRDU module of the data platform application.

Specifically, the data CRDU module may initiate a data write operation request. In response to the request, the execution engine of the database kernel calls, through the API interface, an execution plan corresponding to an SQL statement used to implement a data write function, where the execution plan may be, for example, an execution function, and starts the storage engine to perform a data write operation. Correspondingly, the storage engine may write the data into the embedded database by using the file system. For example, when the embedded database stores the data in a form of table, the data may be specifically written into a table structure created by the database kernel.

In some other examples, in a process of using the electronic device, the user may query or modify data output by the electronic device. Querying the step count in the step counting application is used as an example. The user may perform a data query operation on a running interface of the step counting application. In response to the operation, the step counting application may initiate a data read instruction. In response to the instruction, the step counting application may read data from the embedded database by using the data CRDU module of the data platform application.

Specifically, the data CRDU module may initiate a data read request. In response to the request, the execution engine of the database kernel calls, through the API interface, an execution plan corresponding to an SQL statement used to implement a data read function, and starts the storage engine to perform a data read operation. Correspondingly, the storage engine may read data from the database by using the file system, for example, read data from a table structure created by the database kernel.

It may be understood that, because the executable file loaded to the electronic device may be in a binary form, the execution plan of the SQL statement used to implement the data write function (or the data read function) may also be in a binary form.

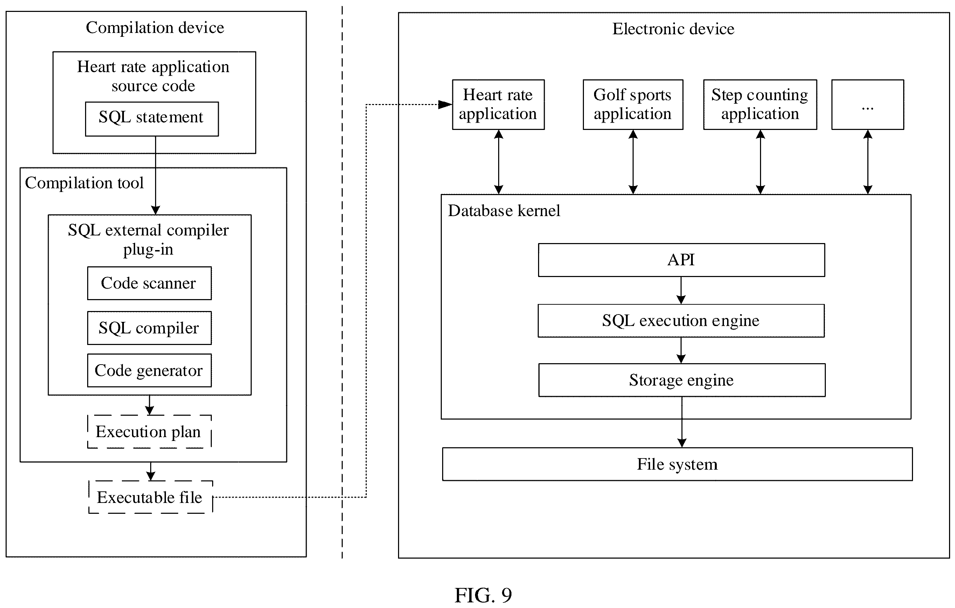

In another specific embodiment, the foregoing SQL statement may alternatively be directly embedded into the foregoing upper-layer application. For example, as shown in FIG. 9, in a process of developing an upper-layer application by using the compilation tool, the developer may embed, into different upper-layer applications, an SQL statement used to implement a function related to the embedded database. FIG. 9 shows only an example of embedding the SQL statement into source code of the heart rate application. Similarly, for another upper-layer application, the SQL statement may be embedded into source code of a corresponding upper-layer application. Subsequently, each upper-layer application may implement various operations on application data of the upper-layer application by using an SQL statement embedded in the upper-layer application and an executable file compiled by using source code of the upper-layer application.

Optionally, in this embodiment, all upper-layer applications may share a same database kernel.

Certainly, the solutions of the foregoing two embodiments may alternatively be used in combination. In other words, for the upper-layer applications installed on the electronic device, some upper-layer applications may implement various operations on data in the manner shown in FIG. 8, and the other upper-layer applications may implement various operations on data in the manner shown in FIG. 9. Optionally, in this embodiment, the upper-layer applications may also share a same data kernel.

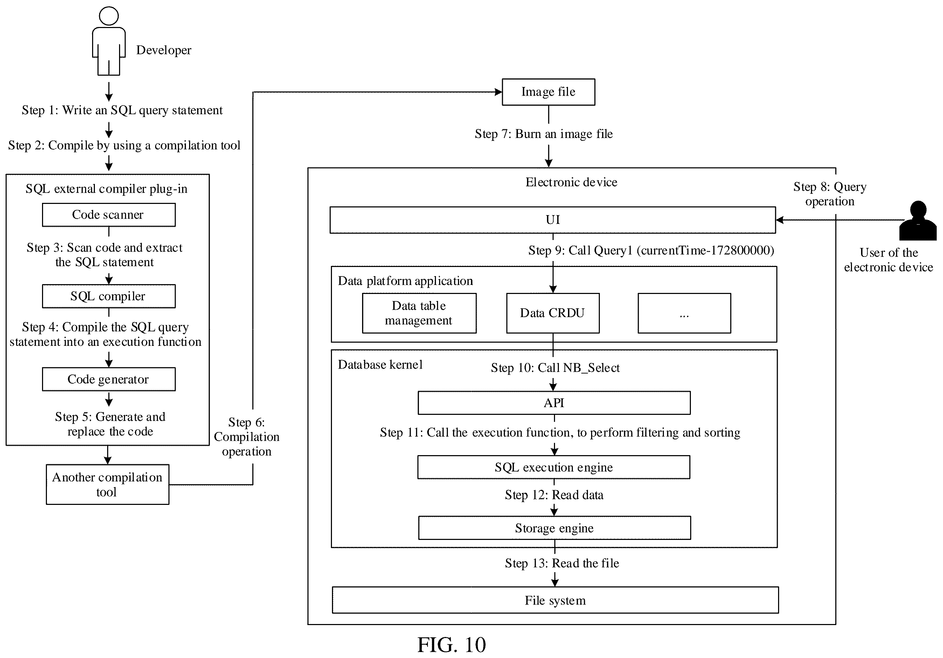

With reference to the solutions shown in FIG. 8 and FIG. 9, the following describes an entire process from SQL statement writing to execution by using an example in which a query operation is performed on data in an embedded database. As shown in FIG. 10, the method operates the following steps.

Step 1: A developer writes an SQL query statement.

It may be understood that the SQL query statement may be used to implement a data query function.

For example, the SQL query statement may be, for example, an underlined code part shown in Table 1.

**Table 1**

| |
|---|
| //Obtain step count and heart rate records in last N days and sort the records by time Result Query1 (int64 time) { |
| //Write a query statement |
| NB_stmt stmt; |
| NB_Prepared(db, "select count(*), step, heartrate from table data where time>? order by time desc; " &stmt); |
| //Replace ? in the preceding statement with a time parameter |
| NB_Bind (&stmt, 1, time) |
| NB_Execute (&stmt); |

It may be understood that Table 1 shows an example in which the step count and heart rate records in the latest N days are queried. For implementation of querying other data, the technical solution provided in embodiments of this application is also applicable.

Step 2: The developer compiles by using a compilation tool.

For example, the developer may compile the SQL query statement by using an SQL external compiler plug-in. In response to an operation performed by the developer to enable a compilation function, the SQL external compiler plug-in starts to compile the SQL query statement. Specifically, this compilation process may include step 3 to step 5.

Step 3: A code scanner scans code and extracts the SQL statement.

It may be understood that the foregoing SQL query statement may be embedded in source code of an application. Therefore, the code scanner may identify the SQL query statement in the code by scanning all the code. The SQL query statement shown in Table 1 is used as an example. The SQL statement extracted by the code scanner may be, for example, a code line corresponding to NB_Prepared, NB_Bind, NB_Execute, or the like.

Step 4: An SQL compiler compiles into an execution function (namely, an execution plan).

In step 4, the SQL compiler may compile the SQL statement extracted by the code scanner into the execution function.

Step 5: A code generator generates and replaces code.

In step 5, the code generator may convert the execution function generated by the SQL compiler into code in a language that is the same as or compatible with a language of the source code of the application, and replace the SQL statement written in step 1 with the converted code.

For example, the SQL statement shown in Table 1 is used as an example, and the replaced code may be similar to an underlined code part shown in Table 2.

**Table 2**

| |
|---|
| //Obtain step count and heart rate records in last N days and sort the records by time Result Query1 (int64 time) { |
| //Write a query statement |
| NB_stmt stmt |
| NB_Select selectStmt = (NB_Select*) &stmt; / /Parse into a query operation |
| selectStmt.projection = {COUNT, "step", "heartrate"} //Set a projection column |
| selectStmt.where.OP = GT; //A query condition is greater than |
| selectStmt.where.colum = "time" //A condition column is time |
| Value of the selectStmt.where.value = time //Assign a condition value |
| selectStmt.orderby.colum = "time" |
| selectStmt.orderby.desc = 1; |
| //Replace ? in the preceding statement with a time parameter selectStmt.where.value=time //Assign a condition value |
| NB_Select (selectStmt); |

It may be understood that the code generated by the code generator shown in Table 2 is merely an example. For source code of an application in different writing languages, code generated by the code generator based on the execution function may be different.

Step 6: Another compilation tool performs a compilation link.

For example, another compilation tool may compile the source code of the application and the code generated by the code generator together, that is, compile the foregoing replaced code file to generate an image file (that is, an image of the executable file). For descriptions of the another compilation tool, refer to the foregoing descriptions.

Step 7: The developer burns the image file into the electronic device.

In step 7, the application and the execution plan corresponding to the SQL query statement may be deployed on the electronic device.

It may be understood that FIG. 10 shows an example of an SQL statement being embedded into the source code of the data platform application shown in FIG. 8. The solution is also applicable to a scenario in which an SQL is embedded into an upper-layer application shown in FIG. 9.

Step 8: The user of the electronic device performs the query operation.

For example, the user of the electronic device may perform the query operation (for example, viewing step count and heart rate records of last two days) on a user interface (user interface, UI) of the electronic device. In response to the operation, the electronic device queries corresponding data. Alternatively, the user of the electronic device may perform the foregoing query operation through a button operation, a voice instruction, a gesture instruction, or the like.

Step 9: The UI interface calls Query1 (currentTime-172800000).

In step 9, the application corresponding to the UI interface may start to call the execution plan. Optionally, the UI interface may be, for example, a running interface of the upper-layer application shown in FIG. 8. It may be understood that step 9 is an example in which the step count and heart rate records in the last two days are queried based on the SQL statement shown in Table 1.

Step 10: A data CRDU module calls NB_Select.

In step 10, the upper-layer application may start to call the execution plan (for example, the execution function) by using a CRDU module of the data platform application.

Step 11: An SQL execution engine runs the execution function (that is, the execution plan) through an API interface, and performs operations such as filtering and sorting.

Step 12: The SQL execution engine starts a storage engine to read data.

Step 13: The storage engine reads a file (that is, reads data) by using a file system.

It may be understood that, in embodiments of this application, the first electronic device and/or the second electronic device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

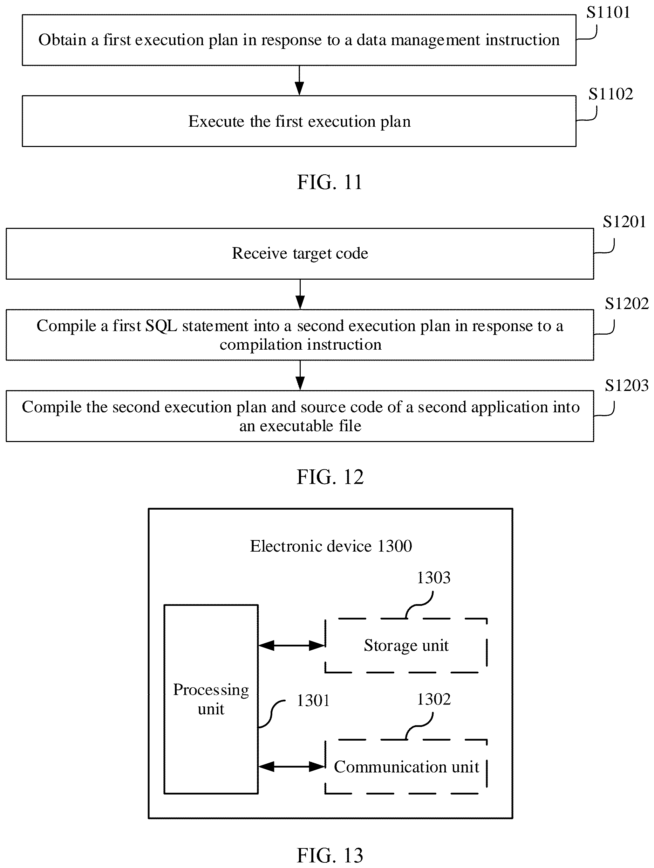

For example, FIG. 11 is a schematic flowchart of an SQL statement compilation and execution method according to an embodiment of this application. The method may be applied to a first electronic device. For example, the first electronic device may be the electronic device 100 shown in FIG. 4. Alternatively, the method may be performed by a processor in the electronic device 100, for example, the processor shown in FIG. 5. As shown in FIG. 11, the method includes the following steps.

S1101: Obtain a first execution plan in response to a data management instruction.

The first execution plan is generated by a second electronic device by compiling a first SQL statement, and the first SQL statement corresponds to the data management instruction. For example, the data management instruction may be an instruction for performing various operations such as CRDU on data. For example, if the data management instruction is a data query instruction, the first SQL statement may be a statement used to implement a data query function. For another example, if the data management instruction is a data modification instruction, the first SQL statement may be a statement used to implement a data modification function.

For example, the second electronic device may be the compilation device 200 shown in FIG. 4, or may be the processor in the compilation device 200.

In some embodiments, the data management instruction may be triggered by a first application (the upper-layer application shown in FIG. 8), and the first execution plan is provided by a second application (the data platform application shown in FIG. 8).

In some other embodiments, the data management instruction may be triggered by the first application, and the first execution plan may also be provided by the first application.

For example, the data management instruction may be triggered based on a user operation (for example, an operation performed by a user on a running interface of the first application), or may be automatically triggered by an electronic device system.

In some embodiments, code of the second application includes source code of the second application and the first SQL statement. In other words, the first SQL statement may be embedded into the source code of the second application.

In some embodiments, a writing language of the source code of the second application is different from a writing language of the first SQL statement, the writing language of the source code of the second application is the same as a writing language of the second execution plan, the second execution plan may be generated by compiling the first SQL statement, and the first execution plan is generated by compiling the second execution plan. Optionally, the first execution plan may be in a binary form or the like.

In some embodiments, the first electronic device may obtain the first execution plan by using an SQL execution engine through an API interface.

S1102: Execute the first execution plan.

In some embodiments, the first electronic device may execute the first execution plan by using the SQL execution engine, and then start, by using the SQL execution engine based on an execution result, a storage engine to perform a data read/write operation.

For example, FIG. 12 is a schematic flowchart of another SQL statement compilation and execution method according to an embodiment of this application. The method may be applied to a second electronic device. For example, the second electronic device may be the compilation device 200 shown in FIG. 4. Alternatively, the method may be performed by a processor in the compilation device 200. As shown in FIG. 12, the method includes the following steps.

S1201: Receive target code.

The target code includes a first SQL statement and source code of a second application, the first SQL statement corresponds to a first writing language, the source code of the second application corresponds to a second writing language, and the first writing language is different from the second writing language.

S1202: Compile the first SQL statement into a second execution plan in response to a compilation instruction.

The second execution plan corresponds to the second writing language.

In some embodiments, the second electronic device may compile the first SQL statement into the second execution plan by using a first compilation tool (that is, an SQL external compiler plug-in).

In some embodiments, the first compilation tool includes a code scanner. Before performing step S1202, the second electronic device may obtain the first SQL statement by scanning the target code by using the code scanner.

In some embodiments, the first compilation tool further includes an SQL compiler and a code generator. The second electronic device may specifically compile the first SQL statement into a third execution plan by using the SQL compiler. A writing language of the third execution plan is different from the second writing language. The code generator generates the second execution plan based on the third execution plan.

S1203: Compile the second execution plan and the source code of the second application into an executable file.

The executable file includes a first execution plan, and the first execution plan is generated by compiling the second execution plan.

In some embodiments, the second electronic device may compile the second execution plan and the source code of the second application into an executable file by using a second compilation tool (that is, the foregoing another compilation tool).

Optionally, the compilation instruction may be triggered by a developer. In some examples, the developer may perform an operation of starting a compilation function once. In response to the operation, the electronic device performs step S1202 and step S1203. The developer may alternatively start the compilation function twice. If an operation used to start a compilation function of the first compilation tool is first performed, the electronic device performs step S1202 in response to the operation. Then, an operation used to start a compilation function of the second compilation tool is performed, and the electronic device performs step S1203 in response to the operation. The compilation instruction is not specifically limited in this application.

The foregoing mainly describes the solutions provided in embodiments of this application from the perspective of the methods. It may be understood that, to implement the foregoing functions, the electronic device includes a corresponding hardware structure and/or software module for performing each of the functions. With reference to the units and algorithm steps described in the embodiments disclosed in this application, embodiments of this application can be implemented in a form of hardware or a combination of hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of the technical solutions in the embodiments of this application.

In this embodiment of this application, the electronic device may be divided into functional modules based on the foregoing method examples. For example, each functional module may be obtained through division based on each corresponding function, or two or more functions may be integrated into one processing unit. The integrated unit may be implemented in a form of hardware, or may be implemented in a form of software functional module. It should be noted that, in embodiments of this application, division into the units is an example, and is merely a logical function division. During actual implementation, another division manner may be used.

FIG. 13 is a diagram of a structure of an electronic device according to an embodiment of this application. The electronic device 1300 may be configured to implement the method performed by the electronic device in the foregoing method embodiments. For example, the electronic device 1300 may specifically include a processing unit 1301.

In a possible example, the electronic device 1300 is the first electronic device, and the processing unit 1301 is configured to support the electronic device 1300 in performing steps S1101 and S1102 in FIG. 11, and/or the processing unit 1301 is further configured to support the electronic device 1300 in performing other steps performed by the first electronic device in embodiments of this application.

In another possible example, the electronic device 1300 is the second electronic device, and the processing unit 1301 is configured to support the electronic device 1300 in performing steps S1201 to S1203 in FIG. 12, and/or the processing unit 1301 is further configured to support the electronic device 1300 in performing other steps performed by the second electronic device in embodiments of this application.

Optionally, the electronic device 1300 shown in FIG. 13 may further include a display unit (not shown in the figure), and the display unit is configured to support the electronic device 1300 in performing various display operations.

Optionally, the electronic device 1300 shown in FIG. 13 may further include a communication unit 1302. The communication unit 1302 is configured to support the electronic device 1300 in performing a step of communication between the electronic device and another device in embodiments of this application.

Optionally, the electronic device 1300 shown in FIG. 13 may further include a storage unit 1303, and the storage unit 1303 stores a program or instructions. When the processing unit 1301 executes the program or the instructions, the electronic device 1300 shown in FIG. 13 is enabled to perform the method shown in the foregoing method embodiments.

For a technical effect of the electronic device 1300 shown in FIG. 13, refer to the technical effect of the method shown in the foregoing embodiments. Details are not described herein again. The processing unit 1301 in the electronic device 1300 shown in FIG. 13 may be implemented by a processor or a processor-related circuit component, and may be a processor or a processing module. The communication unit 1302 may be implemented by a transceiver or a transceiver-related circuit component, and may be a transceiver or a transceiver module. The display unit may be implemented by a display-related component.

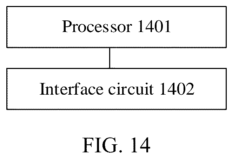

An embodiment of this application further provides a chip system. As shown in FIG. 14, the chip system includes at least one processor 1401 and at least one interface circuit 1402. The processor 1401 and the interface circuit 1402 may be connected to each other through a line. For example, the interface circuit 1402 may be configured to receive a signal from another apparatus. For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, an electronic device is enabled to perform the steps performed by the electronic device in the foregoing embodiments. Certainly, the chip system may further include another discrete component. This is not specifically limited in this embodiment of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (micro controller unit, MCU), a programmable logic device (programmable logic device, PLD), or another integrated chip.

It should be understood that the steps in the foregoing method embodiments may be completed by using an integrated logic circuit of hardware in the processor or an instruction in a form of software. The steps of the method disclosed with reference to embodiments of this application may be directly performed by a hardware processor, or may be performed through a combination of hardware in the processor and a software module.

An embodiment of this application further provides a computer storage medium. The computer storage medium stores computer instructions. When the computer instructions are run on an electronic device, the electronic device is enabled to perform the method in the foregoing method embodiments.

An embodiment of this application provides a computer program product. The computer program product includes a computer program or instructions. When the computer program or the instructions are run on a computer, the computer is enabled to perform the method in the foregoing method embodiments.

An embodiment of this application provides a communication system. The communication system includes a first electronic device and a second electronic device. The first electronic device cooperates with the second electronic device to implement the method in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the method in the foregoing method embodiments.

The electronic device, the computer storage medium, the computer program product, the chip, or the communication system provided in this embodiment is configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above.

In the several embodiments provided in this application, it should be understood that the disclosed apparatus and method may be implemented in another manner. Embodiments may be combined or referenced with each other without conflict. The described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code, such as a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A structured query language SQL statement compilation and execution method, applied to a first electronic device, wherein the method comprises:
obtaining a first execution plan in response to a data management instruction, wherein the first execution plan is generated by a second electronic device by compiling a first SQL statement, and the first SQL statement corresponds to the data management instruction; and
executing the first execution plan.

2. The method according to claim 1, wherein obtaining the first execution plan comprises:
obtaining, by an SQL execution engine, the first execution plan through an API interface.

3. The method according to claim 2, wherein executing the first execution plan comprises:
executing, by the SQL execution engine, the first execution plan; and
starting, by the SQL execution engine, a storage engine to perform a data read/write operation based on an execution result.

4. The method according to any one of claims 1 to 3, wherein the data management instruction is triggered by a first application, and the first execution plan is provided by a second application.

5. The method according to claim 4, wherein code of the second application comprises source code of the second application and the first SQL statement.

6. The method according to claim 5, wherein a writing language of the source code of the second application is different from a writing language of the first SQL statement, the writing language of the source code of the second application is the same as a writing language of a second execution plan, the second execution plan is generated by compiling the first SQL statement, and the first execution plan is generated by compiling the second execution plan.

7. The method according to any one of claims 1 to 6, wherein the first execution plan is in a binary form.

8. An SQL statement compilation and execution method, applied to a second electronic device, wherein the method comprises:
receiving target code, wherein the target code comprises a first SQL statement and source code of a second application, the first SQL statement corresponds to a first writing language, the source code of the second application corresponds to a second writing language, and the first writing language is different from the second writing language;
compiling the first SQL statement into a second execution plan in response to a compilation instruction, wherein the second execution plan corresponds to the second writing language; and
compiling the second execution plan and the source code of the second application into an executable file, wherein the executable file comprises a first execution plan, and the first execution plan is generated by compiling the second execution plan.

9. The method according to claim 8, wherein compiling the first SQL statement into the second execution plan comprises:
compiling, by a first compilation tool, the first SQL statement into the second execution plan.

10. The method according to claim 8 or 9, wherein compiling the second execution plan and the source code of the second application into the executable file comprises:
compiling, by a second compilation tool, the second execution plan and the source code of the second application into the executable file.

11. The method according to claim 9, wherein the first compilation tool comprises a code scanner, and before compiling the first SQL statement into the second execution plan, the method further comprises:
obtaining, by the code scanner, the first SQL statement by scanning the target code.

12. The method according to claim 9 or 11, wherein the first compilation tool further comprises an SQL compiler and a code generator, and compiling, by the first compilation tool, the first SQL statement into the second execution plan comprises:
compiling, by the SQL compiler, the first SQL statement into a third execution plan, wherein a writing language of the third execution plan is different from the second writing language; and
generating, by the code generator, the second execution plan based on the third execution plan.

13. The method according to any one of claims 8 to 12, wherein the executable file is in a binary form.

14. A database system, comprising a database kernel and a first compilation tool, wherein
the database kernel is deployed on a first electronic device, and the database kernel is configured to perform the method according to any one of claims 1 to 7; and
the first compilation tool is deployed on a second electronic device, and the first compilation tool is configured to perform the method according to claim 9.

15. The database system according to claim 14, wherein the database kernel comprises an API interface, an SQL execution engine, and a storage engine, wherein
the API interface is configured to provide the SQL execution engine with an interface for calling a first execution plan;
the SQL execution engine is configured to execute the first execution plan; and
the storage engine is configured to perform a data read/write operation based on an execution result of the first execution plan.

16. The database system according to claim 14 or 15, wherein the first compilation tool comprises a code scanner, an SQL compiler, and a code generator, wherein
the code scanner is configured to perform the method according to claim 11; and
the SQL compiler and the code generator are configured to perform the method according to claim 12.

17. A first electronic device, wherein the first electronic device comprises a first application, a second application, and a database kernel comprised in the database system according to any one of claims 14 to 16, the first application is used to trigger the data management instruction comprised in the method according to any one of claims 1 to 7, and the second application is used to provide the first execution plan comprised in the method according to any one of claims 1 to 7.

18. A second electronic device, wherein the second electronic device comprises a first compilation tool comprised in the database system according to any one of claims 14 to 16.

19. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 7, or the electronic device is enabled to perform the method according to any one of claims 8 to 13.

20. A computer-readable storage medium, wherein the computer-readable storage medium comprises a computer program, and when the computer program is run on an electronic device, the electronic device is enabled to perform the method according to any one of claims 1 to 7, or the electronic device is enabled to perform the method according to any one of claims 8 to 13.

21. A computer program product, wherein when the computer program product runs on a computer, the computer is enabled to perform the method according to any one of claims 1 to 7, or the computer is enabled to perform the method according to any one of claims 8 to 13.

22. A communication system, comprising the first electronic device according to claim 17 and the second electronic device according to claim 18.
